# EUROPÄISCHE PATENTSCHRIFT

(11) **EP 0 915 771 B1**
(45) Veröffentlichungstag und Bekanntmachung des Hinweises auf die Patenterteilung: **13.09.2000**
(21) Anmeldenummer: 97932642.8
(22) Anmeldetag: 30.07.1997
(51) Int. Cl.: B60K 15/035

(54) **VORRICHTUNG ZUM VERHINDERN DES ÜBERFÜLLENS EINES KRAFTSTOFFTANKES**
DEVICE TO PREVENT OVERFILLING OF A FUEL TANK
DISPOSITIF PERMETTANT D'EMPECHER LE TROP-PLEIN D'UN RESERVOIR D'ESSENCE

(30) Priorität: 02.08.1996 AT 139596
(43) Veröffentlichungstag der Anmeldung: 19.05.1999
(73) Patentinhaber: BLAU International Gesellschaft m.b.H., 8160 Preding (AT)
(72) Erfinder: POZGAINER, Günther, A-8010 Graz (AT)
(74) Vertreter: Weiser, Andreas, Dipl.-Ing.
(86) Internationale Anmeldenummer: AT9700177
(87) Internationale Veröffentlichungsnummer: WO9805525

(56) Entgegenhaltungen:
- EP-A- 0 464 420
- DE-A- 4 343 498
- GB-A- 2 254 846
- US-A- 5 036 823

## Beschreibung

Die Erfindung betrifft eine Vorrichtung zum Verhindern des Überfüllens eines mit einem Einfüllstutzen und einer Betankungs-Entlüftungsleitung versehenen Kraftstofftankes, wobei oberhalb der Einmündung der Betankungs-Entlüftungsleitung eine ins Freie oder zu einem Auffangbehälter führende Betriebs-Entlüftungsleitung in den Kraftstofftank mündet, in welche eine Ventileinrichtung eingeschaltet ist, die während des Füllens des Kraftstofftankes geschlossen und in der übrigen Zeit geöffnet ist.

Derartige Vorrichtungen sind z.B. aus der EP 0 464 420 oder der DE 43 43 498 bekannt. Bei den bekannten Vorrichtungen ist die Ventileinrichtung für die Betriebs-Entlüftungsleitung seitlich am oberen Ende des Einfüllstutzens befestigt und wird über einen in das Einfüllstutzenende hineinragenden Ventilbetätigungskörper von der zum Betanken eingeführten Zapfpistole bzw. einer von dieser aufgestoßenen Einfüllstutzen-Verschlußklappe in die Schließstellung versetzt. Diese Lösung ist mechanisch aufwendig und fertigungsintensiv. Durch die US-A-5 036 823 ist eine Vorrichtung gemäß dem Oberbegriff bekannt.

Die Erfindung setzt sich zum Ziel, eine Vorrichtung der gattungsgemäßen Art zu schaffen, die wesentlich einfacher und kostengünstiger aufgebaut ist. Dieses Ziel wird gemäß der Erfindung dadurch erreicht, daß der Ventilverschlußkörper zumindest im gesperrten Zustand von einem strömungsbegrenzenden Nebenschlußweg überbrückt ist.

Die erfindungsgemäße Ventileinrichtung ist ein vom Einfüllstutzenende vollständig getrennter Bauteil, der allein durch die auftretenden Betriebsdrücke bzw. Gasströmungen betätigt wird, was eine aufwendige mechanische Kupplung mit der eingreifenden Zapfpistole bzw. der Verschlußklappe oder Druckmembran erübrigt. Die Strömungsbegrenzung im Nebenschlußweg wird so groß gewählt, daß der sich in der Endphase des Betankens in dem Tankraum oberhalb der Mündung der Betankungs-Entlüftungsleitung aufbauende Überdruck innerhalb jener Zeitspanne, in der ein durchschnittlicher Benützer versucht wäre nachzutanken, nicht wesentlich abbaut. Dadurch ist gewährleistet, daß der Tankraum oberhalb der Betankungs-Entlüftungsleitung während des Tankens nicht signifikant mit Kraftstoff befüllt wird. Erst einige Zeit nach der Beendigung des Tankvorganges wird der Druck über den Nebenschlußweg langsam abgebaut, wodurch allfälliger Kraftstoff aus dem Einfüllstutzen unter geringfügiger Füllung des Tankraumes oberhalb der Mündung der Betankungs-Entlüftungsleitung in den Tank nachrinnt. Sobald der Druckgradient über den Nebenschlußweg einen vorgegebenen Wert unterschreitet, öffnet die Ventileinrichtung und gibt einen wesentlich größeren Strömungsquerschnitt als der Nebenschlußweg frei, wobei dieser Strömungsquerschnitt die normale Be- und Entlüftung während des Betriebes zuläßt.

Im Fahrbetrieb tritt keine nennenswerte Gasströmung über die Ventileinrichtung auf, so daß diese geöffnet bleibt und ermöglicht, daß Druckschwankungen im Inneren des Tankes über den großen Strömungsquerschnitt der Ventileinrichtung sofort ausgeglichen werden.

Eine bevorzugte Ausführungsform der Erfindung, bei welcher die Ventileinrichtung einen an einem ringförmigen Ventilsitz zur Anlage kommenden Ventilverschlußkörper aufweist, zeichnet sich dadurch aus, daß der Nebenschlußweg durch Riefen, Kerben od.dgl. in der Oberfläche des Ventilverschlußkörpers und/oder des Ventilsitzes gebildet ist. Dies stellt eine besonders einfache Art der Errichtung des Nebenschlußweges dar.

In jedem Fall ist es besonders vorteilhaft, wenn der Ventilverschlußkörper der Ventileinrichtung ein Kunststofformteil ist, und wenn der Ventilverschlußkörper durch sein Eigengewicht oder durch Federbelastung in die Offenstellung vorgespannt ist. Dies stellt eine besonders einfache Möglichkeit dar, ein druck- bzw. strömungsgesteuertes Schließen der Ventileinrichtung oberhalb eines vorgegebenen Schwellwertes zu realisieren.

Die Erfindung wird nachstehend an Hand eines in den Zeichnungen dargestellten Ausführungsbeispieles näher erläutert. In den Zeichnungen zeigen
Fig. 1 ein Blockschaltbild der erfindungsgemäßen Vorrichtung und die
Fig. 2 und 3 die Ventileinrichtung gemäß der Erfindung in der Stellung "Fahren" (Fig. 2) bzw. "Tanken" (Fig. 3).

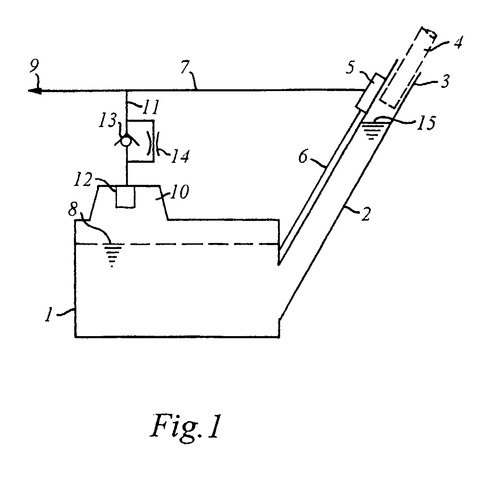

In Fig. 1 ist ein Kraftstofftank 1 mit einem Einfüllstutzen 2 gezeigt. Das obere Ende 3 des Einfüllstutzens 2 nimmt während des Tankens ein Füllrohr 4 einer nicht weiter dargestellten Zapfpistole auf.

Vom oberen Bereich des Kraftstofftankes 1 geht eine Betankungs-Entlüftungsleitung 6 aus, welche in eine Abzugleitung 7 mündet und das Füllen des Tankes 1 bis zu dem Pegel 8 ermöglicht.

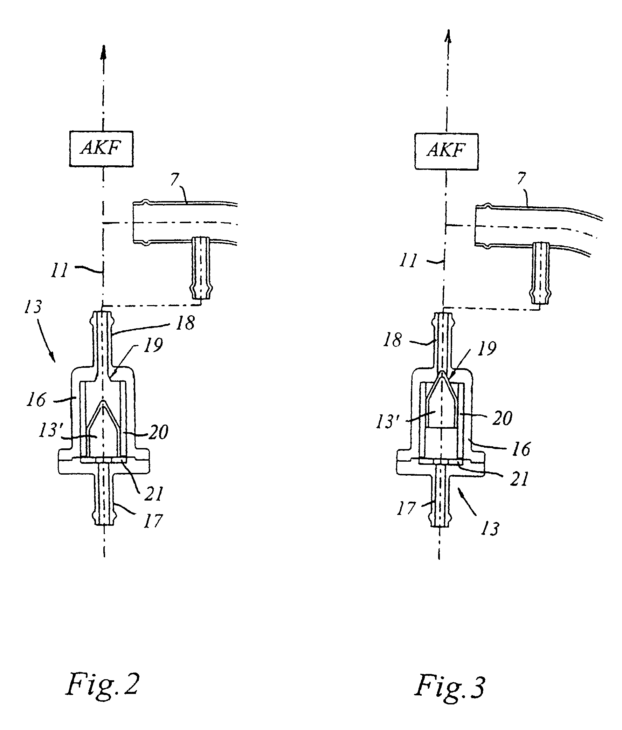

Die Abzugleitung 7 führt bei 9 entweder direkt ins Freie oder zu einem in den Fig. 2 und 3 schematisch und strichliert dargestellten Auffangbehälter eines sog. ORVR-Systems (onboard refuelling vapor recovery system). Ein solcher Auffangbehälter ist mit einem Aktivkohlefilter (AKF) zur Absorption von Kraftstoffdämpfen ausgestattet und wird während des Betriebes des Fahrzeuges von Verbrennungszufuhrgasen durchspült, welche die Kraftstoffrückstände aus dem Aktivkohlefilter lösen und der Verbrennung zuführen.

Ist ein derartiges ORVR-System vorhanden, wird die Abzugleitung 7 über ein Ventil 5 auch an das obere Ende 3 des Einfüllstutzens 2 angeschlossen. Das Ventil 5 wird während des Betankens geöffnet, um die direkt neben dem einströmenden Kraftstoff auftretenden Kraftstoffdämpfe dem Auffangbehälter zuzuführen.

Vom Kraftstofftank 1 geht oberhalb der Einmündung der Betankungs-Entlüftungsleitung 6, im dargestellten Fall vom obersten Punkt eines oberen Luftraumes 10, eine in die Abzugleitung 7 mündende Betriebs-Entlüftungsleitung 11 aus. Die Mündung der Betriebs-Entlüftungsleitung 11 im Kraftstofftank 1 kann z.B. mit Hilfe eines "Roll-over"-Ventiles 12 verschlossen werden, das im Falle eines Umkehrens des Tankes bei einem Unfall schließt. In die Betriebs-Entlüftungsleitung 11 ist eine Ventileinrichtung 13 eingeschaltet, die von einem strömungsbegrenzenden Nebenschlußweg 14 überbrückt ist.

Die Ventileinrichtung 13 sperrt in Richtung vom Kraftstofftank 1 wegführend. Ihr Ventilverschlußkörper 13', der beim gezeigten Beispiel als zylindrischer Körper mit angesetztem Verschlußkegel ausgebildet ist, ist in die Offenstellung vorgespannt, wie später noch ausführlicher erläutert wird.

Die Funktionsweise der dargestellten Vorrichtung ist wie folgt. Wenn der Kraftstofftank 1 bis auf den Pegel 8 gestiegen ist, ist die Betankungs-Entlüftungsleitung 6 verschlossen und zur weiteren Entlüftung steht nur mehr die Betriebs-Entlüftungsleitung 11 zur Verfügung. Die beim Schließen der Betankungs-Entlüftungsleitung 6 schlagartig ansteigende Gasströmung in der Betriebs-Entlüftungsleitung 11 versetzt den Ventilverschlußkörper 13' aus seiner Ruhe-Offenstellung (Fig. 2) in die Schließstellung (Fig. 3), so daß nur mehr der Nebenschlußweg 14 zur Entlüftung des Raumes 10 verbleibt. Der Strömungsquerschnitt des Nebenschlußweges 14 ist jedoch so gering, daß der darüber abfallende Druckgradient nicht ausreichend rasch abgebaut werden kann, um eine sofortige Entlüftung des Raumes 10 zu gewährleisten. Der Raum 10 bleibt daher vom Kraftstoff ungefüllt, und der Kraftstoffspiegel steigt statt dessen im Einfüllstutzen 2 bis auf einen Pegel 15 an, bei dem die Automatik der Zapfpistole abschaltet.

Der Druck im Raum 10 kann sich über den Nebenschlußweg 14 nur langsam in gewissem Ausmaß abbauen, d.h. über einen ausreichenden zeitlichen Abstand zum Tankvorgang, so daß der im Einfüllstutzen 2 verbliebene Kraftstoff unter geringfügiger Füllung des Raumes 10 in den Tank 1 nachrinnt. Im Fahrbetrieb ist sodann der Füllstand im Einfüllstutzen 2 nicht höher als im Tank 1 selbst.

Wenn der Druck im Raum 10 auf einen vorgegebenen Schwellwert abgesunken ist, welcher durch die Vorspannung des Ventilverschlußkörpers 13' definiert wird, öffnet die Ventileinrichtung 13. Das Ventil 12 verhindert ein ungewolltes Austreten von Kraftstoff über die Betriebs-Entlüftungsleitung 11. Im Fahrbetrieb gestattet der große Strömungsquerschnitt der geöffneten Ventileinrichtung 13 einen unmittelbaren und ungehinderten Gasdruckausgleich zwischen dem Kraftstofftank 1 und dem Freien bzw. dem Auffangbehälter.

Der konstruktive Aufbau der Ventileinrichtung 13 und des Nebenschlußweges 14 ist in den Fig. 2 und 3 gezeigt. Die Ventileinrichtung 13 besitzt ein etwa rohrförmiges Gehäuse 16 mit axialen Ein- bzw. Auslässen 17, 18 an beiden Enden. Im Gehäuse 16 ist ein hohler Ventilverschlußkörper 13' axial geführt und an einem ringförmigen Ventilsitz 19 zur Anlage bringbar, welcher auf der Innenseite des Gehäuses 16 nahe dem Auslaß 18 angeordnet ist. Die Ventileinrichtung 13 wird in der Regel in der dargestellten Einbaulage montiert, d.h. senkrecht, wobei der Ventilverschlußkörper 13' durch sein Eigengewicht in die Offenstellung (Fig. 2) vorgespannt ist.

Der Nebenschlußweg 14 bildet sich in der Schließstellung (Fig. 3) der Ventileinrichtung 13 dadurch aus, daß die Oberfläche des Ventilverschlußkörpers 13' und/oder des Ventilsitzes 19 mit Riefen, Kerben od.dgl. versehen ist, so daß keine vollständige Abdichtung zwischen Ventilverschlußkörper 13' und Ventilsitz 19 in der Schließstellung (Fig. 3) gegeben ist.

Es versteht sich, daß der Nebenschlußweg 14 jedoch auch als gesonderter, die Ventileinrichtung 13 permanent überbrükkender strömungsbegrenzender Bauteil ausgebildet sein könnte, beispielsweise in Form einer der Ventileinrichtung 13 parallel geschalteten Leitung mit definierter Engstelle, oder einfach durch eine Bohrung im Ventilverschlußkörper 13'.

Anstelle des gezeigten Ventilverschlußkörpers 13' könnte auch jede andere Art von Ventilverschlußkörper verwendet werden, z.B. ein Ventilteller, eine Ventilklappe, eine Ventilkugel od.dgl. Bei dem gezeigten Beispiel wird der Ventilverschlußkörper 13' an seinem Außenumfang mit Hilfe von sich axial erstrekkenden, über den Innenumfang des Gehäuses 19 verteilten Radialrippen 20 geführt und schlägt in der in Fig. 2 gezeigten Offenstellung an über den Umfang verteilten Innenabsätzen 21 des Gehäuses 16 an, so daß in dieser Stellung eine Umströmung des Ventilverschlußkörpers 13' über die Zwischenräume zwischen den Ansätzen 21 und den Radialrippen 20 möglich ist. Alternativ könnte der Ventilverschlußkörper 13' von einer zentralen Ventilspindel geführt werden. Der Ventilverschlußkörper 13' und das Gehäuse 16 sind bevorzugt aus Kunststoff geformt, es sind jedoch auch andere Materialien wie Metallblech, Aluminium od.dgl. vorstellbar.

## Patentansprüche

1. Vorrichtung zum Verhindern des Überfüllens eines mit einem Einfüllstutzen und einer Betankungs-Entlüftungsleitung (6) versehenen Kraftstofftankes (1), wobei oberhalb der Einmündung der Betankungs-Entlüftungsleitung eine ins Freie oder zu einem Auffangbehälter führende Betriebs-Entlüftungsleitung (11) in den Kraftstofftank mündet, in welche eine Ventileinrichtung (13) eingeschaltet ist, die während des Füllens des Kraftstofftankes geschlossen und in der übrigen Zeit geöffnet ist, wobei die Ventileinrichtung (13) einen Ventilverschlußkörper (13') aufweist, der in Richtung vom Kraftstofftank (1) wegführend mit einem Ventilsitz (19) in Eingriff versetzbar und in die Offenstellung vorgespannt ist, dadurch gekennzeichnet, daß der Ventilverschlußkörper (13') zumindest im gesperrten Zustand von einem strömungsbegrenzenden Nebenschlußweg (14) überbrückt ist.

2. Vorrichtung nach Anspruch 1, wobei die Ventileinrichtung einen an einem ringförmigen Ventilsitz zur Anlage kommenden Ventilverschlußkörper aufweist, dadurch gekennzeichnet, daß der Nebenschlußweg (14) durch Riefen, Kerben od.dgl. in der Oberfläche des Ventilverschlußkörpers (13') und/oder des Ventilsitzes (19) gebildet ist.

3. Vorrichtung nach Anspruch 1 oder 2, dadurch gekennzeichnet, daß der Ventilverschlußkörper (13') durch sein Eigengewicht oder durch Federbelastung in die Offenstellung vorgespannt ist.

4. Vorrichtung nach einem der Ansprüche 1 bis 3, dadurch gekennzeichnet, daß der Ventilverschlußkörper (13') ein Kunststofformteil ist.

5. Vorrichtung nach einem der Ansprüche 1 bis 4, dadurch gekennzeichnet, daß der Ventilverschlußkörper (13') in Form einer Kugel, einer Klappe oder eines Tellers ausgebildet ist.

## Claims

1. Device for preventing overfilling of a fuel tank (1) provided with a filler neck and a tank venting line (6), a service venting line (11) leading into the open or to a receiver opening into the fuel tank above the opening of the tank venting line, a valve means (13) which is closed during filling of the fuel tank and is otherwise open being fitted into said service venting line, the valve means (13) having a valve closure body (13') which can be moved away from the fuel tank (1) until it comes into engagement with a valve seat (19) and being pretensioned into the open position, characterised in that the valve closure body (13') is bridged at least in the locked state by a flow-limiting bypass (14).

2. Device according to claim 1, in which the valve means has a valve closure body coming to bear against an annular valve seat, characterised in that the bypass (14) is formed by grooves, notches or the like in the surface of the valve closure body (13') and/or the valve seat (19).

3. Device according to claim 1 or claim 2, characterised in that the valve closure body (13') is pretensioned into the open position by its own weight or by spring loading.

4. Device according to one of claims 1 to 3, characterised in that the valve closure body (13') is a moulded plastic part.

5. Device according to one of claims 1 to 4, characterised in that the valve closure body (13') is in the form of a ball, flap or disc.

## Revendications

1. Dispositif pour empêcher le trop-plein d'un réservoir de carburant (1) pourvu d'une tubulure de remplissage et d'une conduite (6) pour la mise à l'air lors du remplissage, dans lequel au-dessus de l'embouchure de la conduite de mise à l'air débouche dans le réservoir de carburant une conduite (11) pour la mise à l'air en service qui mène à l'air libre, ou bien à un réservoir de collecte, conduite dans laquelle est branché un agencement de valve (13) qui est fermé pendant le remplissage du réservoir de carburant et qui est ouvert le reste du temps, ledit agencement de valve (13) comprenant un obturateur de valve (13') susceptible d'être déplacé en éloignement du réservoir de carburant (1) jusqu'à venir en engagement avec un siège de valve (19) et précontraint vers la position d'ouverture, caractérisé en ce que l'opercule de valve est by-passé au moins dans la situation fermée par un trajet auxiliaire (14) à limitation de courant.

2. Dispositif selon la revendication 1, dans lequel l'agencement de valve comprend un obturateur de valve qui vient en contact contre un siège de valve de forme annulaire, caractérisé en ce que le trajet auxiliaire (14) est formé par des rayures, des entailles, ou similaires dans la surface de l'obturateur de valve (13') et/ou du siège de valve (19).

3. Dispositif selon l'une ou l'autre des revendications 1 et 2, caractérisé en ce que l'obturateur de valve (13') est précontraint dans la position d'ouverture sous son propre poids, ou sous la charge d'un ressort.

4. Dispositif selon l'une des revendications 1 à 3, caractérisé en ce que l'opercule de valve (13') est une pièce moulée en matière plastique.

5. Dispositif selon l'une des revendications 1 à 4, caractérisé en ce que l'obturateur de valve (13') est réalisé sous la forme d'une bille, d'un volet, ou d'une plaquette.
